# EUROPEAN PATENT APPLICATION

(11) **EP 4 827 235 A1**
(43) Date of publication of application: **21.10.2026**
(21) Application number: 26162578.4
(22) Date of filing: 05.03.2026
(51) Int. Cl.: H04W 84/18, H04W 4/38, H04W 4/70

(54) **SYSTEM AND METHOD FOR EXTENDING COVERAGE OF PUBLIC INTERNET OF THINGS (IOT) NETWORK USING MESH RELAY OF IOT DEVICES**

(30) Priority: 14.04.2025 US 202563788155 P; 22.09.2025 US 202519335637
(71) Applicant: Meshify Inc., Austin, TX 78731 (US)
(72) Inventor: Wight, Lewis, Millcreek, 84109 (US); Thoms, Norman, Colchester, 06415 (US); Zhu, Akira, Dallas, 75241 (US)
(74) Representative: Maucher Jenkins Patent- und Rechtsanwälte Partnerschaft mbB

(57) **Abstract**

A system and method for extending coverage of a public internet of things (IoT) network using a mesh relay of IoT devices. Embodiments of the system and method address inherent limitations of public IoT network coverage by implementing a multi-hop relay architecture that extends connectivity beyond the reach of existing gateways. By allowing the IoT devices to act as intermediaries in the communication chain, embodiments of the system and method can extend coverage of the public IoT network, ensuring a more reliable and widespread network access for IoT devices operating within the public IoT network. (Fig. 1)

## Description

### CROSS-REFERENCE TO RELATED APPLICATIONS

The present patent application claims priority to U.S. Provisional Application No. 63/788,155 filed on 14 April 2025, and entitled "SYSTEM AND METHOD FOR EXTENDING COVERAGE OF PUBLIC INTERNET OF THINGS (IoT) NETWORK USING MESH RELAY OF IoT DEVICES," and is hereby incorporated by reference in its entirety to provide continuity of disclosure.

### COPYRIGHT NOTICE

A portion of the disclosure of this patent document contains material that is subject to copyright protection. The copyright owner has no objection to the facsimile reproduction by anyone of the patent document or the patent disclosure, as it appears in the U.S. Patent and Trademark Office patent files or records, but otherwise reserves all copyright rights whatsoever. The following notice applies to the software and data as described below and in drawings that form a part of this document: Copyright, Meshify, Inc., All Rights Reserved.

### TECHNICAL FIELD

Embodiments of this disclosure relate generally to Internet of Things (IoT) devices and networks, and more particularly, to extending coverage of a public, multipoint IoT network using a relay mesh of IoT devices to transfer data to an IoT device in the network that has an internet-enabled connection that can communicate the data to the internet/cloud.

### BACKGROUND

In general, an IoT network is a network of base stations with radios tuned to send and receive data packets to/from devices that can collect data that pertain to their internal states or the external environment. The devices can include sensors, actuators, appliances and machines. In a typical IoT network, the base stations, which can take the form of gateways, data concentrators, or bridges, enable the IoT devices to communicate and interact over the internet with a centralized server or a cloud-based application via the cloud. This allows the devices in the IoT network to be deployed over a large area to perform any of a number of different tasks across a variety of fields that can include medical, industrial, business, environmental and residential applications.

A public IoT network is one example of an IoT network that is suitable for residential and commercial applications. In general, a public loT network is an IoT network that is available for use by the public or third parties. As used herein, a public IoT network is any wireless network optimized or marketed for battery powered IoT devices such as sensors, actuators, appliances and machines, to connect back through a wireless infrastructure to the internet or a cloud infrastructure that is open to third parties. Examples of such IoT networks include, but are not limited to, HELIUM, AT&T, VERIZON, T-MOBILE, SIGFOX, STARLINK, LTEM, NB IoT, THE THINGS NETWORK, EVERYNET and AMAZON SIDEWALK.

Coverage of these public IoT networks is typically broad, but the extent of the coverage can be dependent on the use of certain devices to bridge the IoT devices to the internet. For example, the AMAZON SIDEWALK public IoT network leverages existing Wi-Fi-connected RING and AMAZON devices (e.g., RING BRIDGE and AMAZON ALEXA) as gateways and data concentrators to bridge the IoT devices to the internet. As more users buy and install more of these devices, the AMAZON SIDEWALK public IoT network can grow. While this is somewhat of a different approach to deploying a public IoT network, its effectiveness is inherently limited by the availability and proximity of these compatible bridge or gateway devices. For example, not all homes have AMAZON ALEXA or RING BRIDGE devices. In those homes, the public IoT network formed from AMAZON SIDEWALK would come from a neighbor who has one of these devices in their home. Depending on the devices of others puts some variability in the public IoT network like the AMAZON SIDEWALK network because the distance a signal can carry from an IoT device can vary due to several factors like the construction material of a home and the type of vegetation in the area. In general, the upstairs or elevated parts of homes and buildings will have a much higher connectivity rate.

Nevertheless, the coverage of the AMAZON SIDEWALK network is broad, but as noted as above, dependent on the physical location of individuals who own and operate specific models of RING and AMAZON devices, since every IoT device that speaks directly to the AMAZON SIDEWALK network has to do so through an active RING BRIDGE or AMAZON ALEXA device (i.e., through direct connection with such a gateway device). This results in network inconsistencies, especially in areas where compatible bridge or gateway devices are sparse, inside large buildings, or in environments where radio signals struggle to penetrate effectively.

These network inconsistencies are common across public networks and not just public IoT networks. Network consistencies can be experienced on any of the public networks. This experience is akin to having the quality of a cell phone degrade or drop while walking/traveling into a certain region. In such a scenario, the person on the call is not aware of the reason that this region in particular is a bad spot for connectivity, as he or she is not innately aware of where all the cellular tower stations are located.

In sum, existing networks can only extend so far as devices that are in direct communication with an internet-connected gateway. That is, existing IoT and other such devices can't communicate with an internet enabled network or otherwise communicate data to such network until they are in such close proximity that they are able to connect directly to the gateway device that, itself is connected to the Internet. In view of the above, it is apparent that there is a need for a system and method of extending network coverage beyond the range of existing gateways, so as to bring connectivity deeper into buildings and expand network coverage beyond the reach of conventional IoT connected devices.

### BRIEF DESCRIPTION

The following presents a simplified summary of the disclosed subject matter in order to provide a basic understanding of some aspects of the various embodiments described herein. This summary is not an extensive overview of the various embodiments. It is not intended to exclusively identify key features or essential features of the claimed subject matter set forth in the Claims, nor is it intended as an aid in determining the scope of the claimed subject matter. Its sole purpose is to present some concepts of the disclosure in a streamlined form as a prelude to the more detailed description that is presented later.

This disclosure addresses the network inconsistencies issue that arises in public IoT networks that are due to dead spots by allowing IoT devices in these dead spots to communicate to the internet using nearby IoT devices with better coverage as relays. In essence, the solution proposed by the disclosure utilizes the same radio heads used by the public IoT networks, but repurposes them for point-to-point communication. This approach enables an extension of network coverage beyond the direct range of existing gateways, bridging connectivity deeper into buildings and expanding coverage beyond the reach of conventional IoT devices that connect to the public IoT network. This approach not only has utility with the AMAZON SIDEWALK public IoT network, but it can also provide the same benefits when used in conjunction with other IoT networks, including, but not limited to, NBIoT, LTEM, LORAWAN, ZIGBEE, Z-WAVE, and even satellite based IoT networks.

The solution proposed by the disclosure to address the network inconsistencies issue that arises in public IoT networks that stems from dead spots also includes utilizing an asynchronous network relay protocol that facilitates data relays between IoT devices that are unable to establish a direct connection with a gateway device. Instead of relying solely on direct connections to gateways, the asynchronous network relay protocol enables the IoT devices to forward messages to other nearby IoT devices in a multi-hop relay fashion until the data reaches an IoT device capable of transmitting it to an available gateway. This decentralized approach significantly improves the coverage of the public IoT network. Further, the asynchronous network relay protocol ensures that data is transmitted efficiently by utilizing dynamic routing mechanisms, optimizing for power consumption, and ensuring that messages are delivered to an internet-connected gateway without unnecessary retransmissions or failures. By enabling IoT device-to-IoT device relaying, the functional range of a public IoT network like the AMAZON SIDEWALK network and other IoT networks can be extended, while maintaining low-latency and high-reliability data transmission.

In an embodiment, this disclosure introduces a method to extend a public IoT network using only battery-powered sensors via peer-to-peer wireless data transfers among the battery-powered sensors, for the purpose of risk mitigation at any point in the sensor's data lifecycle. For example, this method can have applicability with the detection of the presence of water or freezing about a component or appliance in a residence or business, and the remediation of the issue that lead to the presence of water or freezing so that damage to the property can be minimized.

In an embodiment, this disclosure introduces a method to extend coverage at the edge of a public point-to-multipoint IoT network with a relay mesh of battery-powered sensors.

In an embodiment, this disclosure introduces a method for relaying sensor data. This method comprises: detecting an environment condition (e.g., water presence or freezing) using a battery-powered sensor; initiating communication with an adjacent battery-powered sensor via a point-to-point relay protocol; transmitting the sensor data from the initial battery-powered sensor to one or more intermediary battery-powered sensors; and delivering the data to a battery-powered sensor that is connected to an internet-enabled network, wherein the method ensures continued data flow despite incomplete direct network coverage within the monitored area.

In an embodiment, this disclosure introduces a system. The system comprises: a public internet of things (IoT) network including a plurality of IoT devices and one or more gateway devices located about the plurality of IoT devices to send and receive data packets from the plurality of IoT devices over the internet; and a relay mesh network for the plurality of IoT devices that facilitates data relays between the plurality of IoT devices when any of the IoT devices are unable to establish a direct connection with the one or more gateway devices having an internet-enabled connection, wherein each of the plurality of IoT devices operating in the relay mesh network is configured with an asynchronous network relay protocol that facilitates the data relays between the plurality of IoT devices when any of the IoT devices are unable to establish the direct connection with the one or more gateway devices having an internet-enabled connection, wherein each IoT device operating in the relay mesh network uses the asynchronous network relay protocol to forward data packets to other nearby IoT devices in a multi-hop relay fashion until the data packet reaches an IoT device capable of transmitting the data packets to the one or more gateway devices having an internet-enabled connection.

In an embodiment, this disclosure introduces a method. The method comprises: establishing a public internet of things (IoT) network including a plurality of IoT devices and one or more gateway devices located about the plurality of IoT devices to send and receive data packets from the plurality of IoT devices over the internet; and establishing a relay mesh network for the plurality of IoT devices that facilitates data relays between the plurality of IoT devices when any of the IoT devices are unable to establish a direct connection with the one or more gateway devices having an internet-enabled connection, wherein each of the plurality of IoT devices operating in the relay mesh network is configured with an asynchronous network relay protocol that facilitates the data relays between the plurality of IoT devices when any of the IoT devices are unable to establish the direct connection with the one or more gateway devices having an internet-enabled connection, wherein each IoT device operating in the relay mesh network uses the asynchronous network relay protocol to forward data packets to other nearby IoT devices in a multi-hop relay fashion until the data packet reaches an IoT device capable of transmitting the data packets to the one or more gateway devices having an internet-enabled connection.

In an embodiment, this disclosure introduces a system. The system comprises: a public internet of things (IoT) network including a plurality of battery-powered IoT sensor to collect environmental related data and one or more gateway devices located about the plurality of battery-powered IoT sensors to send and receive data packets of the environmental related data collected from the plurality of battery-powered IoT sensors over the internet; and a relay mesh network for the plurality of battery-powered IoT sensors that facilitates data relays between battery-powered IoT sensors when any of the battery-powered IoT sensors are unable to establish a direct connection with the one or more gateway devices having an internet-enabled connection, wherein each of the plurality of battery-powered IoT sensors operating in the relay mesh network is configured with an asynchronous network relay protocol that facilitates the data relays between the battery-powered IoT sensors when any of the battery-powered IoT sensors are unable to establish the direct connection with the one or more gateway devices having an internet-enabled connection, wherein each battery-powered IoT sensor operating in the relay mesh network uses the asynchronous network relay protocol to forward data packets to other nearby battery-powered IoT sensors in a multi-hop relay fashion until the data packet reaches a battery-powered IoT sensor capable of transmitting the data packets to the one or more gateway devices having an internet-enabled connection.

In an embodiment, this disclosure introduces a method for relaying sensor data. The method comprises: detecting data indicative of an environmental condition using a battery-powered sensor deployed in an internet of things (IoT) network including a plurality of battery-powered sensors; initiating communication with an adjacent battery-powered sensor in the IoT network via a point to point relay protocol; transmitting the detected environmental condition data from the battery-powered sensor that initially detected the data to the adjacent battery-powered sensor; determining whether the adjacent battery-powered sensor that receives the detected environmental condition data is connected to an internet-enabled network; in response to determining that the adjacent battery-powered sensor has a connection to an internet-enabled network, communicating the detected environmental condition data to the internet via the internet-enabled network connection; in response to determining that the adjacent battery-powered sensor does not have a connection to an internet-enabled network, transmitting the detected environmental condition data to one or more intermediary battery-powered sensors in the IoT network; and for each transmission of the detected environmental condition data to the one or more intermediary battery-powered sensors, determining whether any of the one or more intermediary battery-powered sensors has an internet-enabled network connection.

### DRAWINGS

The present technology will be better understood from reading the following description of non-limiting embodiments, with reference to the attached drawings, wherein below:
FIG. 1 is a schematic of a system for extending coverage of a public IoT network using a relay mesh network according to an embodiment of the disclosure;
FIG. 2 is a schematic block diagram of components that may be present in an IoT device deployed in the system of FIG. 1 according to an embodiment of the disclosure;
FIG. 3 is a process flow diagram of an example method for extending the coverage of a public IoT network using the system depicted in FIG. 1 with IoT devices having components described in relation to FIG. 2 according to an embodiment of the disclosure; and
FIG. 4 is a process flow diagram of an example method illustrating actions performed by an IoT device in the relay mesh network of FIG. 1 according to an embodiment of the disclosure.

### DETAILED DESCRIPTION

Example embodiments of the present disclosure will be described more fully hereinafter with reference to the accompanying drawings, in which some, but not all embodiments are shown. Indeed, the present technology may be embodied in many different forms and should not be construed as limited to the embodiments set forth herein. Rather, these embodiments are provided so that this disclosure will satisfy applicable legal requirements. For ease of understanding, like numbers may refer to like elements throughout.

Throughout the specification, the following terms take the meanings explicitly associated herein, unless the context clearly dictates otherwise. The phrases "in one embodiment" and "in some embodiments" as used herein do not necessarily refer to the same embodiment(s), though it may. Furthermore, the phrases "in another embodiment" and "in some other embodiments" as used herein do not necessarily refer to a different embodiment, although it may. Thus, as described below, various embodiments may be readily combined, without departing from the scope or spirit of the present disclosure.

In addition, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

It is understood that at least one aspect/functionality of various embodiments described herein can be performed in real-time and/or dynamically. As used herein, the term "real-time" is directed to an event/action that can occur instantaneously or almost instantaneously in time when another event/action has occurred. For example, the "real-time processing," "real-time computation," and "real-time execution" all pertain to the performance of a computation during the actual time that the related physical process (e.g., a user interacting with an application on a mobile device) occurs, in order that results of the computation can be used in guiding the physical process.

As used herein, the term "dynamically" and term "automatically," and their logical and/or linguistic relatives and/or derivatives, mean that certain events and/or actions can be triggered and/or occur without any human intervention. In some embodiments, events and/or actions in accordance with the present disclosure can be in real-time and/or based on a predetermined periodicity of at least one of: nanosecond, several nanoseconds, millisecond, several milliseconds, second, several seconds, minute, several minutes, hourly, several hours, daily, several days, weekly, monthly, etc.

In some embodiments, exemplary inventive, specially programmed computing systems with associated devices are configured to operate in the distributed network environment, communicating with one another over one or more suitable data communication networks (e.g., the internet, satellite, etc.) and utilizing one or more suitable data communication protocols/modes such as, without limitation, IPX/SPX, X.25, AX.25, AppleTalk^{™}, TCP/IP (e.g., HTTP), near-field wireless communication (NFC), RFID, Narrow Band Internet of Things (NBIOT), 3G, 4G, 5G, GSM, GPRS, WiFi, WiMax, CDMA, satellite, ZigBee, and other suitable communication modes. In some embodiments, the NFC can represent a short-range wireless communications technology in which NFC-enabled devices are "swiped," "bumped," "tap" or otherwise moved in close proximity to communicate.

The material disclosed herein may be implemented in software or firmware or a combination of them or as instructions stored on a machine-readable medium, which may be read and executed by one or more processors. A machine-readable medium may include any medium and/or mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others.

As used herein, the terms "computer engine" and "engine" identify at least one software component and/or a combination of at least one software component and at least one hardware component which are designed/programmed/configured to manage/control other software and/or hardware components (such as the libraries, software development kits (SDKs), objects, etc.).

Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. In some embodiments, the one or more processors may be implemented as a Complex Instruction Set Computer (CISC) or Reduced Instruction Set Computer (RISC) processors; x86 instruction set compatible processors, multi-core, or any other microprocessor or central processing unit (CPU). In various implementations, the one or more processors may be dual-core processor(s), dual-core mobile processor(s), and so forth.

Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that make the logic or processor. Of note, various embodiments described herein may, of course, be implemented using any appropriate hardware and/or computing software languages (e.g., C++, Objective-C, Swift, Java, JavaScript, Python, Perl, QT, etc.).

In some embodiments, one or more of exemplary inventive computer-based devices of the present disclosure may include or be incorporated, partially or entirely into at least one personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, internet of things (IoT) device and so forth.

As used herein, term "server" should be understood to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and application software that support the services provided by the server. Cloud servers are examples.

In some embodiments, as detailed herein, one or more of exemplary inventive computer-based systems and methods of the present disclosure may obtain, manipulate, transfer, store, transform, generate, and/or output any digital object and/or data unit (e.g., from inside and/or outside of a particular application) that can be in any suitable form such as, without limitation, a file, a contact, a task, an email, a tweet, a map, an entire application (e.g., a calculator), etc. In some embodiments, as detailed herein, one or more of exemplary inventive computer-based systems and methods of the present disclosure may be implemented across one or more of various computer platforms such as, but not limited to: (1) AmigaOS, AmigaOS 4, (2) FreeBSD, NetBSD, OpenBSD, (3) Linux, (4) Microsoft Windows, (5) OpenVMS, (6) OS X (Mac OS), (7) OS/2, (8) Solaris, (9) Tru64 UNIX, (10) VM, (11) Android, (12) Bada, (13) BlackBerry OS, (14) Firefox OS, (15) iOS, (16) Embedded Linux, (17) Palm OS, (18) Symbian, (19) Tizen, (20) WebOS, (21) Windows Mobile, (22) Windows Phone, (23) Adobe AIR, (24) Adobe Flash, (25) Adobe Shockwave, (26) Binary Runtime Environment for Wireless (BREW), (27) Cocoa (API), (28) Cocoa Touch, (29) Java Platforms, (30) JavaFX, (31) JavaFX Mobile, (32) Microsoft XNA, (33) Mono, (34) Mozilla Prism, XUL and XULRunner, (35) .NET Framework, (36) Silverlight, (37) Open Web Platform, (38) Oracle Database, (39) Qt, (40) SAP NetWeaver, (41) Smartface, (42) Vexi, and (43) Windows Runtime.

In some embodiments, exemplary inventive computer-based systems and methods, and/or exemplary inventive computer-based devices of the present disclosure may be configured to utilize hardwired circuitry that may be used in place of or in combination with software instructions to implement features consistent with principles of the disclosure. Thus, implementations consistent with principles of the disclosure are not limited to any specific combination of hardware circuitry and software. For example, various embodiments may be embodied in many different ways as a software component such as, without limitation, a stand-alone software package, a combination of software packages, or it may be a software package incorporated as a "tool" in a larger software product.

For example, exemplary software specifically programmed in accordance with one or more principles of the present disclosure may be downloadable from a network, for example, a website, as a stand-alone product or as an add-in package for installation in an existing software application. For example, exemplary software specifically programmed in accordance with one or more principles of the present disclosure may also be available as a client-server software application, or as a web-enabled software application. For example, exemplary software specifically programmed in accordance with one or more principles of the present disclosure may also be embodied as a software package installed on a hardware device.

In some embodiments, exemplary inventive computer-based systems/platforms, exemplary inventive computer-based devices, and/or exemplary inventive computer-based components of the present disclosure may be configured to handle numerous concurrent users that may be, but is not limited to, at least 100 (e.g., but not limited to, 100-999), at least 1,000 (e.g., but not limited to, 1,000-9,999), at least 10,000 (e.g., but not limited to, 10,000-99,999), at least 100,000 (e.g., but not limited to, 100,000-999,999), at least 1,000,000 (e.g., but not limited to, 1,000,000-9,999,999), at least 10,000,000 (e.g., but not limited to, 10,000,000-99,999,999), at least 100,000,000 (e.g., but not limited to, 100,000,000-999,999,999), at least 1,000,000,000 (e.g., but not limited to, 1,000,000,000-10,000,000,000).

In some embodiments, exemplary inventive computer-based systems and/or exemplary inventive computer-based devices of the present disclosure may be configured to output to distinct, specifically programmed graphical user interface implementations of the present disclosure (e.g., a desktop, a web app., etc.). In various implementations of the present disclosure, a final output may be displayed on a displaying screen which may be, without limitation, a screen of a computer, a screen of a mobile device, or the like. In various implementations, the display may be a holographic display. In various implementations, the display may be a transparent surface that may receive a visual projection. Such projections may convey various forms of information, images, and/or objects. For example, such projections may be a visual overlay for a mobile augmented reality (MAR) application.

As used herein, terms "cloud," "internet cloud," "cloud computing," "cloud architecture," "cloud-based application," and similar terms correspond to at least one of the following: (1) a large number of computers connected through a real-time communication network (e.g., internet); (2) providing the ability to run a program or application on many connected computers (e.g., physical machines, virtual machines (VMs)) at the same time; (3) network-based services, which appear to be provided by real server hardware, and are in fact served up by virtual hardware (e.g., virtual servers), simulated by software running on one or more real machines (e.g., allowing to be moved around and scaled up (or down) on the fly without affecting the end user).

In some embodiments, the exemplary inventive computer-based systems and methods, and/or the exemplary inventive computer-based devices of the present disclosure may be configured to securely store and/or transmit data by utilizing one or more of encryption techniques (e.g., private/public key pair, Triple Data Encryption Standard (3DES), block cipher algorithms (e.g., IDEA, RC2, RCS, CAST and Skipjack), cryptographic hash algorithms (e.g., MD5, RIPEMD-160, RTRO, SHA-1, SHA-2, Tiger (TTH), WHIRLPOOL, RNGs).

The aforementioned examples are, of course, illustrative and not restrictive.

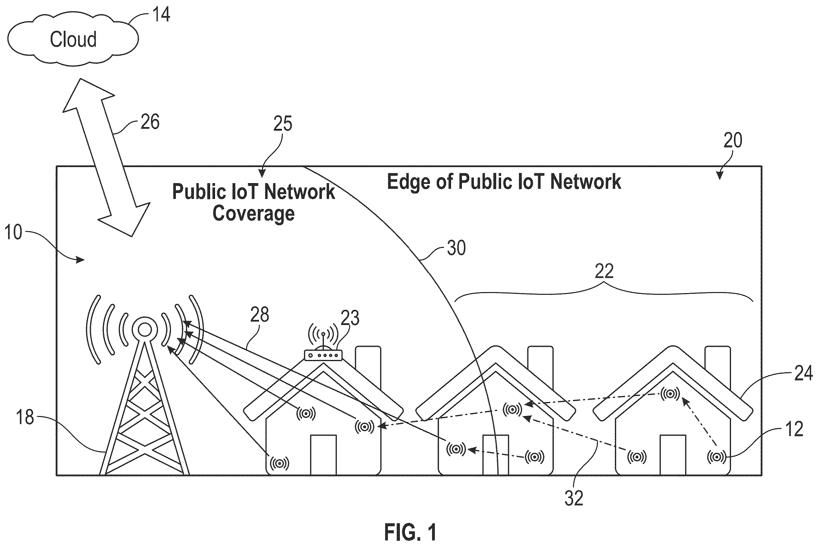

As noted above, this disclosure relates generally to IoT devices and networks, and more particularly, to extending coverage of a public, multipoint IoT network using a relay mesh of IoT devices to transfer data among the devices to an IoT device in the network that has an internet-enabled connection that can communicate the data to the Internet/cloud. FIG. 1 shows a schematic illustration of a public IoT network 10 with a plurality of IoT devices 12 that can communicate with the cloud 14 via a cellular tower 18 deployed with a system 20 for extending coverage of the public IoT network 10 using a relay mesh network 22 according to an embodiment of the disclosure. It is understood for purposes of clarity in providing an explanation of the various embodiments of the disclosure, a minimal amount of IoT devices 12 and cellular towers 18 are depicted. For example, it is understood that the public IoT network 10 can contain a greater number of IoT devices 12 and cellular towers 18 than that depicted in FIG. 1. Further, although the IoT devices 12 are depicted in FIG. 1 as deployed in residential sites (e.g., homes, apartments, condominiums) 24, it is understood the public IoT network 10 can also include commercial business sites and industrial sites. Further it is understood that embodiments of the disclosure are not meant to be limited to a public IoT network that includes IoT devices 12 only deployed with residential sites, commercial sites, or industrial sites, but instead the embodiments can be utilized in a public network that includes a mix of all site types.

The IoT devices 12 can include any of a number of commercially available nonstandard computing hardware devices that can connect wirelessly to a network and can transmit data over a network for further processing, storage, transmission, and/or monitoring of the data. For example, data from the IoT devices 12 can be transmitted to the cellular tower 18 for communication over the internet to the cloud 14 where the data can be processed, analyzed, monitored and stored. In this manner, a cloud-based application and/or server can take action based on the data (e.g., inform parties maintaining control of the IoT devices in a particular location where the data came from, provide specific operating instructions to the IoT devices). Examples of IoT devices that have applicability with the embodiments described herein include sensors, actuators, appliances and machines. As envisioned, these types of IoT devices can include a multitude of uses across a variety of applications. In one embodiment, the IoT devices 12 and the public IoT network 10 and the relay mesh network 22 that can form the system 20 have utility in insurance applications for mitigating risk. For example, the IoT devices can include water sensors that monitor for the presence of water leaking from pipes in a residence, business or industrial site, and/or detect freezing conditions that can lead to frozen pipes. To this extent, the IoT sensors can continually collect data from the pipes and reliably communicate the data to the cloud 14 for monitoring and analysis. If the analysis of the data is indicative of a presence of water or freezing conditions, then instructions can be sent from the cloud 14 back to the site with the detected conditions to perhaps shut off the water supply to leaking pipe, turn up the temperature in the site to thaw the pipe, and/or contact the occupant at the site where the data was obtained and provide a warning to take action before these conditions lead to a severe problem where damage to the site can be considerable.

As used herein, the public IoT network 10 means any wireless network optimized or marketed for any type of IoT devices such as sensors, actuators, appliances and machines, to connect back through a wireless infrastructure to the internet or a cloud infrastructure that is open to third parties. Although embodiments of the disclosure have particular utility with the AMAZON SIDEWALK network, these embodiments are suitable for any of a number IoT networks that include, but are not limited to, HELIUM, AT&T, VERIZON, T-MOBILE, SIGFOX, STARLINK, LTEM, NB IoT, and THE THINGS NETWORK, EVERYNET.

Referring back to FIG. 1, included about the public IoT network 10 is one or more gateway devices 23 located about the IoT devices 12 to send and receive data packets from the IoT devices over the internet to the cloud 14 via the cellular tower 18. As shown in the example, only one of the residential sites 24 is depicted with a gateway device 23. It is understood that more sites in the public IoT network 10 can have gateway devices 23. Although it is possible that each residential site in the public IoT network 10 can have a gateway device, the likelihood is that there will be a high likelihood that not all sites will have one. In a public IoT network, like the AMAZON SIDEWALK network, those residential sites 24 without a gateway device 23 will have to rely on coverage from a gateway device from a nearby site to establish an internet-enabled connection to communicate data from their IoT devices to the cloud 14. It is understood that with certain public IoT networks, the use of a cellular tower to facilitate communication between the IoT devices in a network and the cloud can be obviated by the use of other public network gateways. Accordingly, embodiments of this disclosure are not meant to be limited to use with cellular towers. For example, in a public IoT network, like the AMAZON SIDEWALK network, one of Amazon's commercially available public gateway devices, and those devices later offered in the future, can be used to facilitate communication between the IoT devices and the cloud.

In this example illustrated in FIG. 1, the residential site 24 on the left-hand side of the figure with the gateway device 23 has an internet-enabled connection that facilitates transmission of data from IoT devices 12 that are within the network span of coverage 25. Per FIG. 1, since the IoT devices in the residential site 24 on the left-hand side of the figure and some of the IoT devices in the residential site in the middle of the figure are within the network span of coverage 25 that is provided by the gateway device 23, those IoT devices will have a direct internet-enabled connection 28 that enables communication of data read therefrom to the cloud 14. Since the middle residential site 24 in FIG. 1 is located on the edge 30 of the coverage of the public IoT network 10, there will be IoT devices 12 in that site that cannot make the direct internet-enabled connection 28 to the cloud 14 via the gateway device 23 in the residential site on the left-hand side of the figure. As shown in the example illustrate in FIG. 1, the middle residential site 24 contains one IoT device 12 that can make a direct internet-enabled connection 28 to the cloud 14, while two other IoT devices in this site are beyond the edge 30 and unable to utilize the gateway 23 in site on the left-hand side of the figure to make the direct internet-enabled connection 28 to the cloud 14. The residential site 24 on the right-hand side of FIG. 1 is fully beyond the edge 30 of the network span of coverage 25 provided by the gateway device 23 in the site on the left-hand side of the figure, and thus the IoT devices in this residential site are unable to make a direct internet-enabled connection 28 to the cloud 14 for transmitting data to the cloud 14.

The system 20 of the invention overcomes this lack of network coverage under the public IoT network 10 that is provided with respect to the IoT devices 12 in the residential site 24 on the right-hand side of FIG. 1, as well as to those IoT devices in the middle site that are beyond the edge 30 and unable to establish the direct internet-enabled connection 28 to the cloud 14 via the gateway device 23 in the site on the left-hand side of the figure by using the relay mesh network 22 to provide relay peer-to-peer connections 32 that can relay to the gateway device 23 so that the data from the IoT devices 12 in those sites that are without coverage can use this relay to transmit data from these devices to the cloud 14. In essence, the relay mesh network 22 facilitates data relays between the IoT devices 12 when any of the IoT devices are unable to establish direct internet-enabled connection with one of the gateway devices 23 in the public IoT network 10. In one embodiment, each of the plurality of IoT devices 12 operating in the relay mesh network 22 can be configured with an asynchronous network relay protocol that facilitates the data relays between the IoT devices when any of the IoT devices are unable to establish the direct internet-enabled connection 28 to the cloud 14 via a gateway device 23. To this extent, each IoT device 12 operating in the relay mesh network 22 is configured to use the asynchronous network relay protocol to forward data packets to other nearby IoT devices in a multi-hop relay fashion until the data packet reaches an IoT device capable of transmitting the data packets to a gateway device that is available with an internet-enabled connection.

Essentially, the asynchronous network relay protocol provides the relay mesh network 22 with a communication architecture that employs point-to-point, multi-hop, and message routing strategies. In one embodiment, the asynchronous network relay protocol can be used to communicate data from the IoT devices 12 to the internet-enabled network using a multi-hop beacon strategy. With a multi-hop beacon strategy, an IoT device that is stranded (in the sense that it does not have an established direct connection to the internet/gateway), and needs to transmit data, is configured to beacon the data asynchronously to the relay mesh network 22. To this extent, any IoT device in range will pick up the beacon and either transmit the data to the internet/gateway if has an established direct internet-enabled connection with the internet/gateway, or repeat the beacon further along the relay mesh network 22 until it is received by a nearby IoT device with such a connection. In one embodiment, embedded in the beacon data along with an identifier associated with the source of the beaconed data, is the number of hops from the message originator. This number of hops or hopping window specified by the message originating IoT device limits the number of hops and repeats a data transmission can inflict on the relay mesh network 22.

In order to operate point-to-point, multi-hop, and message routing strategies with the relay mesh network 22, it is helpful and useful that the battery of IoT devices are not negatively impacted to a significant degree while in use in the network. In one embodiment, the IoT devices 12 are configured to only listen for beacons from other IoT devices once a minute for two beacon intervals. For example, a BLUETOOTH beacon can take about 20ms to send a beacon. A normally operating IoT device in range of a gateway would then listen for a beacon for 40ms each minute. Since the IoT device's receive current is much smaller than the transmit current, this has minimal effect on the device battery life and performance. Thus, the embodiments of this disclosure will ensure that the IoT devices in the relay mesh network can operate at low power.

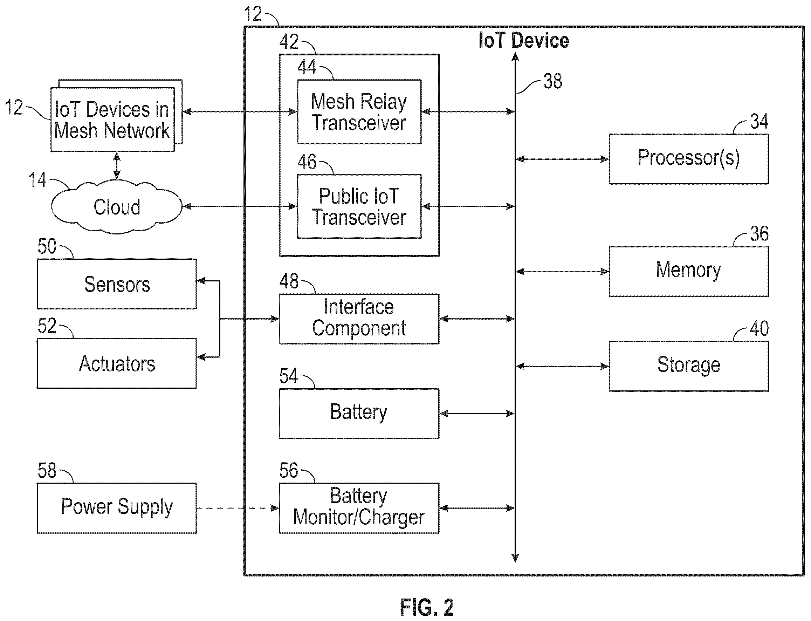

FIG. 2 is a schematic block diagram of components that may be present in an IoT device 12 deployed in the system 20 of FIG. 1 according to an embodiment of the disclosure. The IoT device 12 may include any combinations of the components shown in the example of FIG. 2. The components may be implemented as integrated circuits (ICs), portions thereof, discrete electronic devices, or other modules, logic, hardware, software, firmware, or a combination thereof adapted in the IoT device 12, or as components otherwise incorporated within a chassis of a larger system. The block diagram of FIG. 2 is intended to show a high level view of components of the IoT device 12. However, some of the components shown may be omitted, additional components may be present, and different arrangement of the components shown may occur in other implementations.

As shown in FIG. 2, the IoT device 12 may include a processor 34, which may be a microprocessor, a multi-core processor, a multithreaded processor, an ultra-low voltage processor, an embedded processor, or other known processing element. The processor 34 may be a part of a system on a chip (SoC) in which the processor 34 and other components are formed into a single integrated circuit, or a single package, such as the Edison^{™} or Galileo^{™} SoC boards from Intel. As an example, the processor 34 may include an Intel^{®} Architecture Core^{™} based processor, such as a Quark^{™}, an Atom^{™}, an i3, an i5, an i7, or an MCU-class processor, or another such processor available from Intel^{®} Corporation, Santa Clara, Calif. However, any number of other processors may be used, such as available from Advanced Micro Devices, Inc. (AMD) of Sunnyvale, Calif., a MIPS-based design from MIPS Technologies, Inc. of Sunnyvale, Calif., an ARM-based design licensed from ARM Holdings, Ltd. or customer thereof, or their licensees or adopters. The processors may include units such as an A5-A9 processor from Apple^{®} Inc., a Snapdragon^{™} processor from Qualcomm^{®} Technologies, Inc., or an OMAP^{™} processor from Texas Instruments, Inc.

The processor 34 may communicate with a system memory 36 over a bus 38. Any number of memory devices may be used to provide for a given amount of system memory. As examples, the memory can be random access memory (RAM) in accordance with a Joint Electron Devices Engineering Council (JEDEC) low power double data rate (LPDDR)-based design such as the current LPDDR2 standard according to JEDEC JESD 209-2E, or a next generation LPDDR standard, such as LPDDR3 or LPDDR4 that will offer extensions to LPDDR2 to increase bandwidth. In various implementations the individual memory devices may be of any number of different package types such as single die package (SDP), dual die package (DDP) or quad die package (Q17P). These devices, in some embodiments, may be directly soldered onto a motherboard to provide a lower profile solution, while in other embodiments the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs. For example, a memory may be sized between 2 GB and 16 GB, and may be configured as a DDR3LM package or an LPDDR2 or LPDDR3 memory, which is soldered onto a motherboard via a ball grid array (BGA).

In order to provide persistent storage of information such as data, applications, operating systems and so forth, a mass storage 40 may also be coupled to the processor 34 via the bus 38. To enable a thinner and lighter system design, the mass storage 40 may be implemented via a solid state drive (SSD). Other devices that may be used for the mass storage 40 can include flash memory cards, such as SD cards, microSD cards, xD picture cards, and the like, and USB flash drives.

In low power implementations, the mass storage 40 may be on-die memory or registers associated with the processor 34. However, in some examples, the mass storage 40 may be implemented using a micro hard disk drive (HDD). Further, any number of new technologies may be used for the mass storage 40 in addition to, or instead of, the technologies described, such resistance change memories, phase change memories, holographic memories, or chemical memories, among others. For example, the IoT device 12 may incorporate the 3D XPOINT memories from Intel^{®} and Micron^{®}.

The components may communicate over the bus 38. The bus 38 may include any number of technologies, including industry standard architecture (ISA), extended ISA (EISA), peripheral component interconnect (PCI), peripheral component interconnect extended (PCIx), PCI express (PCIe), or any number of other technologies. The bus 38 may be a proprietary bus, for example, used in a SoC based system. Other bus systems may be included, such as an I²C interface, I³C interface, an SPI interface, point to point interfaces, and a power bus, among others.

The IoT device 12 can further include a radio unit 42 to facilitate communication with a gateway device (FIG. 1) when it is within the network span of coverage 25 (FIG. 2) in order to establish a direct internet-enabled connection to the cloud 14 (FIG. 1). The radio unit 42 can also operate in the relay mesh network 22 (FIG. 1) to facilitate the data relays between the IoT devices in the mesh network with the asynchronous network relay protocol when the IoT device is not in range of a gateway 23 to establish a direct internet-enabled connection. For example, if an IoT device 12 needs to transmit over the relay mesh network 22 using the asynchronous network relay protocol instead of its main IoT network connection (such as after detecting an environmental condition or parameter which it is configured to monitor/detect), it would then begin to beacon nonstop for at least a minute. In one embodiment, while operating in the relay mesh network 22, the radio unit 42 is configured to transmit short bursts of small data packets and listen for and receive equally short bursts of small data packets transmitted from other nearby IoT devices in the relay mesh network. In addition, the radio unit 42 in each of the plurality of IoT devices 12 is configured to listen for the short bursts of small data packets over a short period of time for the entire life of the IoT device. In one embodiment, the short period of time ranges from about 20ms to about 60ms every minute for the life of the IoT device.

An objective of such a configuration is for a nearby IoT device 12 to wake up and listen for a short period within the beaconing period of the IoT device that is beaconing. The IoT devices that are listening for the beaconing will have optimized battery performance in comparison to the IoT device transmitting the beacon/data. This behavior of the listening IoT device versus the transmitting IoT device is desired since an IoT device in an alarm state will place a higher priority on getting that alarm to the internet than its own battery life.

In operation, the radio unit 42 of each of the IoT devices 12 is configured to initiate a data relay in the relay mesh network 22 in response to the IoT device determining that a direct connection to a gateway device with an internet-enabled connection cannot be established. In one embodiment, the radio unit 42 of each of the IoT devices 12 can initiate the data relay in the relay mesh network 22 by beaconing nonstop the short bursts of small data packets for a predetermined time period. To this extent, the radio units 42 of the other nearby IoT devices 12 in the relay mesh network 22 are configured to listen for the beaconing of the nonstop short bursts of small data packets.

The nearby IoT device 12 in the relay mesh network 22 that receives the nonstop short bursts of small data packets is configured to determine whether a connection can be established with a gateway 23 having an internet-enabled connection for communication of the data packets to the internet to the cloud 14 via the cellular tower 18 and the communication link 26. In one embodiment, the nearby IoT device 12 is configured to encode the small data packets for a beaconing transmission with its radio unit 42 to another nearby IoT device 12 in the relay mesh network 22 in response to determining that a direct internet-enabled connection 25 cannot be established with a gateway device 23 in the public IoT network 10.

In an embodiment, the beaconing of the transmission of the small data packets to other nearby IoT devices 12 to find a device that can establish a direct internet-enabled connection continues until finding one of the nearby IoT devices that can establish a connection with a gateway device having an internet-enabled connection or hopping through a predetermined number of IoT devices in the relay mesh network 22 without finding an established connection and thereby stopping further attempts to beacon a transmission of the small data packets. It should be understood that the number of hops that are utilized as a threshold to stop further beaconing a transmission of the small data packets will depend on the configurations that one desires to specify for the network. Thus, the embodiments of the disclosure are not meant to be limited to a specific number as the embodiments contemplate any number of hops (e.g., 2, 3, etc.).

Essentially, the asynchronous network relay protocol that the IoT devices 12 utilize to initiate a data relay in the relay mesh network 22 in response to determining that it cannot establish a direct connection to a gateway device 23 in the public IoT network 10 with an internet-enabled connection is a subroutine that can be enabled on the devices. Thus, in one embodiment, the IoT devices 12 in the public IoT network can be relay-enabled. As a result, the asynchronous network relay protocol enables the IoT devices 12 to have two possible roles to play, and accordingly are self-aware of which state they are in.

In a first state, the IoT device 12 can be in the range of a gateway device 23, and thus can establish a direct internet-enabled network for transmission of data to the cloud 14. In one embodiment, an IoT device 12 that is in range of a gateway device will continue to function as a stand-alone IoT device with one added feature. That is, this IoT device will listen on a regular interval for beacons from other IoT devices 12. The use of asynchronous beacons is advantageous because it gives the message a longer range and shorter on air time. When this message is received via the beacon data, this receiving IoT device, assuming that it can establish a direction to a gateway, will transmit the data to the internet via the gateway that is in range and include the original message address that the original IoT device was beaconing. This allows the software to attribute the message or alarm to the IoT device 12 that is not in range of the gateway instead of the IoT device that is completing the transmission to the internet.

The other state or second state that is possible for an IoT device 12 that is enabled to operate with the asynchronous network relay protocol, is when the IoT device is not in range of a gateway and cannot establish a direct connection to an internet-enabled network. In one embodiment, an IoT device 12 that is not able to establish a connection to a gateway will continue its normal operations (monitoring parameters/conditions, collecting data, etc.) until it needs to send data to the internet. For example, an IoT device 12 in this state will not be able to send data over its assigned IoT network and instead will encode its data into a beacon transmission. In one embodiment, a predetermined window is assigned to the beaconing that specifies a number of hops to nearby IoT devices that the beacon transmission can undergo to find one IoT device that has an established direction connection to the gateway before timing out and necessitating that the transmission of the beacon to stop and wait before trying initiate another transmission. Thus, in order to ensure data relay transmission, it is possible that the beaconing of the data will need to be transmitted for a multiple of the receive window assigned to the IoT device 12 that is in range of the gateway to ensure data relay transmission.

In one embodiment, as shown in FIG. 2, the radio unit 42 of the IoT device 12 can include a mesh relay transceiver 44 and a public IoT transceiver 46 to facilitate the operation of IoT device in both states of operation. As shown in FIG. 2, the bus 38 may couple the processor 34 to the mesh relay transceiver 44, for communications with other IoT devices in the relay mesh network 22. The mesh relay transceiver 44 may use any number of frequencies and protocols, such as 2.4 gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the IoT devices in the relay mesh network 22. For example, a WLAN unit may be used to implement Wi-Fi^{™} communications in accordance with the Institute of Electrical and Electronics Engineers (IEEE) 802.11 standard. In addition, wireless wide area communications, e.g., according to a cellular or other wireless wide area protocol, can occur via a WWAN unit.

The mesh relay transceiver 44 may communicate using multiple standards or radios for communications at different range. For example, the IoT device 12 may communicate with geographically proximate devices, e.g., within about 10 meters, using a local transceiver based on BLE, or another low power radio, to save power. More distant IoT devices 12 e.g., within about 50 meters, may be reached over ZigBee or other intermediate power radios. Both communications techniques may take place over a single radio at different power levels, or may take place over separate transceivers, for example, a local transceiver using BLE and a separate mesh transceiver using ZigBee. The IoT device 12 may be incorporated into an MCU as an address directly accessible by the chip, such as in the Curie^{®} units available from Intel.

The public ToT transceiver 46 may be included to communicate with devices in the cloud 14 via the cellular tower 18 and the communication link 26. The public IoT transceiver 46 may be a LPWA transceiver that follows the IEEE 802.15.4, IEEE 802.15.4g, IEEE 802.15.4e, IEEE 802.15.4k, or NB-IoT standards, among others. The IoT device 12 may communicate over a wide area using LoRaWAN^{™} (Long Range Wide Area Network) developed by Semtech and the LoRa Alliance. The techniques described herein are not limited to these technologies, but may be used with any number of other cloud transceivers that implement long range, low bandwidth communications, such as SIGFOX, and other technologies. Further, other communications techniques, such as time-slotted channel hopping, described in the IEEE 802.15.4e specification may be used.

Any number of other radio communications and protocols may be used in addition to the systems mentioned for the mesh relay transceiver 44 and the public IoT transceiver 46, as described herein. For example, the radio transceivers 44 and 46 may include an LTE or other cellular transceiver that uses spread spectrum (SPA/SAS) communications for implementing high-speed communications, such as for video transfers. Further, any number of other protocols may be used, such as Wi-Fi^{®} networks for medium speed communications, such as still pictures, sensor readings, and provision of network communications.

The mesh relay transceiver 44 and the public IoT transceiver 46 may include radios that are compatible with any number of 3GPP (Third Generation Partnership Project) specifications, notably Long Term Evolution (LTE), Long Term Evolution-Advanced (LTE-A), Long Term Evolution-Advanced Pro (LTE-A Pro), or Narrow Band IoT (NB-IoT), among others. It can be noted that radios compatible with any number of other fixed, mobile, or satellite communication technologies and standards may be selected. These may include, for example, any Cellular Wide Area radio communication technology, which may include e.g. a 5th Generation (5G) communication systems, a Global System for Mobile Communications (GSM) radio communication technology, a General Packet Radio Service (GPRS) radio communication technology, or an Enhanced Data Rates for GSM Evolution (EDGE) radio communication technology. Other Third Generation Partnership Project (3GPP) radio communication technology that may be used includes UMTS (Universal Mobile Telecommunications System), FOMA (Freedom of Multimedia Access), 3GPP LTE (Long Term Evolution), 3GPP LTE Advanced (Long Term Evolution Advanced), 3GPP LTE Advanced Pro (Long Term Evolution Advanced Pro)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High-speed Packet Access), HSDPA (High-Speed Downlink Packet Access), HSUPA (High-Speed Uplink Packet Access), HSPA+ (High-speed Packet Access Plus), UMTS-TDD (Universal Mobile Telecommunications System-Time-Division Duplex), TD-CDMA (Time Division-Code Division Multiple Access), TD-SCDMA (Time Division-Synchronous Code Division Multiple Access), 3GPP Rel. 8 (Pre-4G) (3rd Generation Partnership Project Release 8 (Pre-4th Generation)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP LTE Extra, LTE Licensed-Assisted Access (LAA), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)). PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard)), Wireless Gigabit Alliance (WiGig) standard, mmWave standards in general (wireless systems operating at 10-90 GHz and above such as WiGig, IEEE 802.11 ad, IEEE 802.11 ay, and the like. In addition to the standards listed above, any number of satellite uplink technologies may be used for the public IoT transceiver 46, including, for example, radios compliant with standards issued by the ITU (International Telecommunication Union), or the ETSI (European Telecommunications Standards Institute), among others. The examples provided herein are thus understood as being applicable to various other communication technologies, both existing and not yet formulated.

It is understood that the mesh relay transceiver 44 and the public IoT transceiver 46 are illustrative of one type of transmitting and receiving device that can be used as part of the radio unit 42 and are not meant to be limiting to the embodiments described herein. For example, instead of using a transceiver for the mesh relay and the public IoT network, it is possible to have a separate transmitter and receiver components configured for communication with the mesh relay and the public IoT network.

As mentioned above, embodiments of this disclosure have applicability to a wide variety of public IoT networks. In one embodiment, the embodiments of the disclosure can be implemented with the AMAZON SIDEWALK network. In this scenario, the mesh relay transceiver 44 and the public IoT transceiver 46 can operate at 2.4GHzand 900Mhz in order to be compatible with the 2.4 GHz radio and the 900Mhz radio that is used with the AMAZON SIDEWALK network. The 2.4Ghz radio is typically used for communication to a gateway device via the BLUETOOTH protocol, while the 900Mhz radio can use either the FSK or LORA protocol. It is understood that more protocols are likely to be added in the future using these existing radios and architectures, and thus are envisioned to be equally applicable as being deployed with the embodiments described herein. These same radios that are now used with the AMAZON SIDEWALK network, and those later-developed radios that are expected to have utility with the network in the future can be re-purposed in software to send and receive beacons with the embedded data collected by the IoT devices 12.

FIG. 2 further shows that another component of the IoT device 12 can include an interface component 48 to connect external devices that form a part of the IoT device itself. Depending on the function that the IoT device 12 is desired to perform, these external devices can in one embodiment, include sensors 50 and actuators 52. The sensors 50 and actuators 52 can include any of a number of different types of sensors and actuators. For example, the sensors 50 can include, but are not limited to, water sensors, accelerometers, level sensors, flow sensors, temperature sensors, pressure sensors, barometric pressure sensors, humidity sensors, motion sensor, light sensors, and the like, while the actuators 52 can include, but are not limited to, power switches, valve actuators, an audible sound generator, a visual warning device, and the like. As shown in FIG. 2, the bus 38 may couple the processor 34 to the interface component 48 that is used to connect to the sensors 50 and actuators 52.

While not shown, various input/output (I/O) devices may be present within, or connected to, the IoT device 12. For example, a display may be included to show information, such as sensor readings or actuator position. An input device, such as a touch screen or keypad may be included to accept input.

As shown in FIG. 2, the IoT device 12 can include a battery 54 so that the device can form a battery-powered IoT device. In this manner, the battery 54 can power the IoT device 12. The battery 54 can include, but is not limited to, a lithium ion battery, a metal-air battery, such as a zinc-air battery, an aluminum-air battery, a lithium-air battery, a hybrid super-capacitor, and the like. It is understood that instead of using a battery to power the IoT device 12, power can be attained from other sources. For example, in a scenario where the IoT device is mounted in a fixed location, it may have a power supply coupled to an electrical grid.

A battery monitor/charger 56 may be included in the IoT device 12 to track the state of charge (SoCh) of the battery 54. The battery monitor/charger 56 may be used to monitor other parameters of the battery 54 to provide failure predictions, such as the state of health (SoH) and the state of function (SoF) of the battery 54. The battery monitor/charger 56 may include a battery monitoring integrated circuit, such as an LTC4020 or an LTC2990 from Linear Technologies, an ADT7488A from ON Semiconductor of Phoenix Ariz., or an IC from the UCD90xxx family from Texas Instruments of Dallas, Tex. The battery monitor/charger 56 may communicate the information on the battery 54 to the processor 34 over the bus 38. The battery monitor/charger 56 may also include an analog-to-digital (ADC) converter that allows the processor 34 to directly monitor the voltage of the battery 54 or the current flow from the battery. The battery parameters may be used to determine actions that the IoT device 12 may perform, such as transmission frequency, mesh network operation, sensing frequency, and the like.

A power supply 58 coupled to a grid, may be coupled with the battery monitor/charger 56 to charge the battery 54. In some examples, the power supply 58 may be replaced with a wireless power receiver to obtain the power wirelessly, for example, through a loop antenna in the IoT device 12. A wireless battery charging circuit, such as an LTC4020 chip from Linear Technologies of Milpitas, Calif., among others, may be included in the battery monitor/charger 56. The specific charging circuits chosen will depend on the size of the battery 54, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others. In some examples, the power supply 58 may be augmented or replaced with solar panels, a wind generator, a water generator, or other natural power systems.

As noted above, the components of the IoT device 12 that are depicted in FIG. 2 are representative of basic core components in the device and are not meant to be exhaustive of all the components that can be utilized by an IoT device. Those skilled in the art will appreciate that the IoT device can have other components including, but not limited to, security and encryption components for facilitating secure transmission of the data from the IoT devices 12.

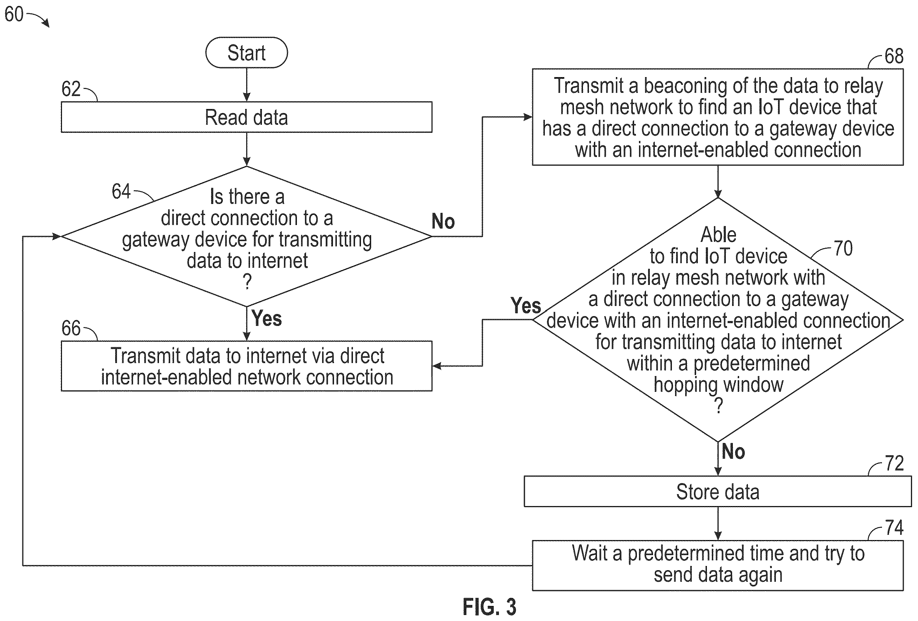

FIG. 3 is a process flow diagram 60 of an example method for extending the coverage of a public IoT network using the system 20 depicted in FIG. 1 with IoT devices 12 having components described in relation to FIG. 2. The process flow diagram 60 assumes that a public IoT network including a plurality of IoT devices and one or more gateway devices located about the plurality of IoT devices to send and receive data packets from the plurality of IoT devices over the internet have been established like that in the example scenario depicted and described in relation to FIG. 1. In addition, the flow diagram 60 assumes that a relay mesh network 22 for the plurality of IoT devices that facilitates data relays between IoT devices when any of the IoT devices are unable to establish a direct connection with one or more gateway devices having an internet-enabled connection.

As shown in FIG. 3, operations of the process flow diagram 60 begin at 62 where one of the IoT devices read data. Next, a determination is made at 64 to ascertain whether the IoT device that has read the data has a direct connection to a gateway device with internet-enabled connection for transmitting the data to the internet for communication to the cloud. If there is an established direct connection, then the IoT device can transmit the data to the internet at 66 via the gateway device in the public IoT network that has the connection.

Alternatively, if there is not an established direct connection, then the IoT device transmits a beaconing of the data to the relay mesh network at 68 to find an IoT that has a direct connection to a gateway device with an internet-enabled connection. In this manner, nearby IoT devices in the relay mesh network will be listening for the transmitted beaconing of the short bursts of the small data packets that encompasses the data read by the IoT device. As mentioned above, upon one of the nearby IoT devices receiving the transmitted beaconing of the short bursts of the small data packets, the receiving IoT device will determine whether the IoT device receiving the transmitted beaconing of the short bursts of the small data packets can establish a connection with a gateway device in the public IoT network with an internet-enabled connection for communication of the data packets to the internet. In response to determining that a connection can be established with a gateway device in the public IoT network having an internet-enabled connection, the nearby IoT device that receives the transmitted beaconing of the data will communicate the data packets to the internet via the established connection for communication to the cloud.

If a connection cannot be established with a gateway device in the public IoT network having an internet-enabled connection, then the nearby IoT device encodes the small data packets for further transmission beaconing to another nearby IoT device in the relay mesh network. Per block 70, these operations of beaconing the transmission of the data to nearby IoT devices and looking for a device with an internet-enabled connection continue until a connection is found or until a predetermined hopping window assigned to the transmission has been reached. As shown in FIG. 3, once it is determined that one of the nearby IoT devices in the mesh relay network has an established direct connection to a gateway with an internet-enabled connection, then the data is transmitted at block 66. However, if an established direct internet connection has not been found after reaching the predetermined hopping window, then the data read from the originating IoT device is stored at 72 and after waiting a predetermined amount of time at 74, another attempt is made to find an established direct connection to the internet at 64.

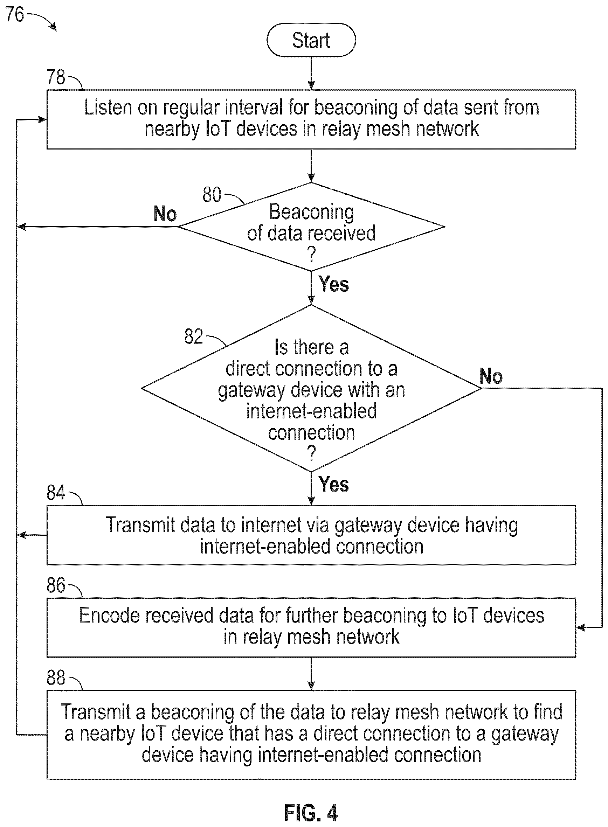

FIG. 4 is a process flow diagram 76 illustrating more of the details associated with the actions performed by an IoT device in the relay mesh network if an IoT device is unable to find an established internet connection to communicate data to the cloud. As discussed above, an IoT device in the relay mesh network will listen on a regular interval at 78 for a beaconing of data sent from nearby IoT devices in the network. If a beaconing of data is not received in the interval as determined at 80, then the flow diagram loops back and continues to listen for a transmitted beaconing at 78. Once it is determined at 80 that a beaconing of data is received, then the receiving IoT device determines at 82 whether it has an established direct connection to a gateway device with an internet-enabled connection for transmitting the data to the internet for communication to the cloud.

If there is an established internet connection as determined at 82, then the data is transmitted via that connection at 84. The operations of the flow diagram 76 then loop back to block 78 where the IoT listens on a regular interval for a beaconing of data sent from any of the IoT devices in the relay mesh network. Alternatively, if it is determined at 82 that there is not an established internet connection, then the IoT device encodes the small data packets encompassed by the data transmitted from the originating IoT device at 86 for further transmission to other IoT devices in the relay mesh network in order to find one that has an established direct connection to a gateway device with an internet-enabled connection. To this extent, the IoT device then transmits a beaconing of the encoded data to the relay mesh network at 88 with the aim that a nearby IoT device in the network will have a direct connection to a gateway device so that the data can be sent to the internet for communication to the cloud. The nearby IoT device that receives the transmitted beaconing of the short bursts of the small data packets will then go through the aforementioned steps to determine whether it can transmit the data to the internet via an established connection. These actions are continued until one of the IoT devices is found to have an internet-established connection or if the predetermined hopping window has been reached without successfully finding an IoT device with a direct connection. Nevertheless, once a particular IoT device in the relay mesh network has fully processed the viability of transmitting the data in the beaconing, then per FIG. 4, the device will cycle back to block 78 where it will continue to listen for an incoming transmission of a beaconing of data from another IoT device in the relay mesh network.

While, for purposes of simplicity of explanation, the operations shown in FIGS. 3 and 4 are described as a series of acts. It is to be understood and appreciated that the subject innovation associated with FIGS. 3 and 4 is not limited by the order of acts, as some acts may, in accordance therewith, occur in a different order, concurrently with other acts, be split in such a manner that portions of the displayed acts are split and performed at different time instances as two or more acts. Accordingly, modifications or variations of the acts depicted in FIGS. 3 and 4 are possible. Further, those skilled in the art will understand and appreciate that a methodology or operations depicted in FIGS. 3 and 4 could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

In sum, the system and method of the invention facilitates data relays between sensors/IoT devices 12 hat are unable to establish a direct connection with a gateway device. Instead of relying solely on direct connections to gateways, the system and method of the invention enables such sensors to forward messages to other nearby sensors in a multi-hop relay fashion until the data reaches a sensor capable of transmitting it to an available gateway. This decentralized approach significantly improves network reliability and coverage, particularly in challenging connectivity environments. The protocol employed by the system and method of the invention ensures that data is transmitted efficiently by utilizing dynamic routing mechanisms, optimizing for power consumption, and ensuring that messages are delivered to an internet-connected gateway without unnecessary retransmissions or failures. By enabling sensor-to-sensor relaying, the system and method of the invention effectively extends the functional range of Amazon Sidewalk, and other IoT networks, while maintaining low-latency, high-reliability data transmission.

In one embodiment, as disclosed above, the system 20 includes a plurality of sensors/IoT devices 12 configured to monitor, detect or sense one or more parameters, conditions, etc. at the location where such sensor 12 is deployed. Each sensor 12 has a radio/transceiver configured to transmit, in short bursts, small data packets, and a radio/transceiver configured to listen for such bursts from other sensors/IoT in equally short bursts. In an embodiment, the radio and transmitter may be the same (e.g., transceiver) or separate components. In an embodiment, all the sensors/loT devices configured with the inventive protocol listen for small data packets, essentially a beacon/beacon message for a short period (20ms-60ms) every minute for the entire life of the sensor. If a sensor/loT device needs to transmit over the protocol of the invention instead of its main IoT network, it would then begin to beacon nonstop for at least a minute. The objection is for a nearby sensor in the network to wake up and listen for a short period within the beaconing period of the sensor that is beaconing. Accordingly, if a transmitting sensor is beaconing for a minute, so long as another sensor is awake and listening for a short interval every minute, this beacon with embedded sensor data can be received by the listening sensor. This optimizes battery performance of the sensor listening for the beacon and puts the heavier lift on the transmitting sensor. As disclosed above, this behavior is desired since a sensor in an alarm state will place a higher priority on getting that alarm to the internet than its own battery life.

In an embodiment, each sensor/IoT device has two possible roles to play (or configuration states) in the inventive system 20, and are self-aware of which state they are in: a first state where the sensor/IoT device 12 is in range of a gateway, and a second state where the sensor/IoT device is out of range of a gateway. A sensor/IoT device 12 that is in range of a gateway device will continue to function as a stand-alone sensor with one added feature. This sensor 12 will be placed in a listening mode and will listen on a regular interval for beacons from other sensors. For example, such sensor may wake up for a short period of time and listen for a beacon, and then go back to sleep. In an embodiment, sensors in such listening mode are configured to listen for a beacon at a frequency equivalent to once every transmission duration. For example, if transmitting sensors are configured to transmit a beacon for a minute duration, then the sensors in listening mode are configured to wake up once every minute. Once awake, such listening sensors are configured to listen for a beacon for a short amount of time sufficient to receive the beacon/data being transferred and/or remain awake so long as is necessary to receive such data. As noted above, for example, the sensors operating in the listening state may listen for small data packets/beacon message for a short period (20ms-60ms) every minute for the entire life of the sensor. The use of asynchronous beacons is important because it gives the message a longer range and shorter on-air time. When this message is received via the beacon data, the listening sensor will transmit the data to the internet via the gateway that is in range and include the original message address (the address of sensor that was beaconing/transmitting). This allows the software to attribute the message or alarm to the sensor/IoT device that is not in range of the gateway instead of the sensor that is completing the transmission to the internet.

A sensor/loT device 12 that is not in range of a gateway device (i.e., is not able to establish a direct connection with a gateway device) will continue its normal sensor operations (acquiring data, detecting parameters or environmental conditions, etc.) until it needs to send data to the internet. A sensor/IoT device in this state will not be able to send data over its assigned IoT network and will instead encode its data into a beacon transmission. In an embodiment, the beaconing of the data is transmitted for a multiple of the receive window assigned to the listening sensor that is in range of the gateway to ensure data relay transmission, as indicated above.

In an embodiment, as disclosed above, communication of data from sensors/IoT devices to the internet or other network when using the protocol of the present invention uses a multi-hop beacon strategy. In the case of a stranded sensor that needs to transmit data, it will beacon the data asynchronously. Any sensor in range will pick up the beacon and either transmit the data to the internet (if in range of network a gateway device) or repeat the beacon further. Embedded in the beacon data is the number of hops from the message originator. This limits the number of hops and repeats a data transmission can inflict on the network.

As indicated above, it is desirable that the battery of sensor/IoT devices 12 in range of gateway devices are not negatively impacted. To reduce power consumption for normally connected devices, such sensor/IoT devices only listen for beacons once a minute for two beacon intervals. For example, a Bluetooth beacon takes about 20ms to send a beacon. A normally operating sensor in range of a gateway would then listen for a beacon for 40ms each minute. Since the receive current is much smaller than the transmit current, this has minimal effect on the sensor's battery life and performance.

The system and method of the invention thus provides a novel and effective solution to the inherent limitations of public IoT network coverage by implementing a multi-hop relay architecture that extends connectivity beyond the reach of existing gateways. By allowing sensors to act as intermediaries in the communication chain, the system and method of the invention ensures more reliable and widespread network access for IoT devices operating within public IoT networks such as, for example, the Amazon Sidewalk ecosystem.

In an embodiment, a system includes a first sensor device configured to gather data relating to a first parameter and a second sensor device configured to gather data relating to a second parameter. Each of the sensor devices are configured to operate in a first state where the sensor device is in range of a gateway device, and a second state where the sensor is out of range of the gateway device. When in the second state, the first sensor is configured to transmit a beacon encoded with the data relating to the first parameter. When in the first state, the second sensor is configured to listen for a beacon for a duration of time and to receive the beacon and data from the first sensor. The system may further include a gateway device configured for connection to a public network, wherein the second sensor device is in direct communication with the gateway device. In an embodiment, the second sensor device is configured to transmit the data relating to the first parameter to a public IoT network via the gateway device. In an embodiment, the system may include a plurality of additional sensors intermediate the first sensor device and the second sensor device, each of said additional sensors being configured to operate in the first state and the second state. In an embodiment, the duration of time that the second sensor listens for the beacon defines a receive window, and the first sensor transmits the beacon for a duration of time defining a transmit window, wherein the transmit window is a multiple of the receive window. In one example, the transmit window may be at least one minute, and the receive window may be between about 20 milliseconds and about 60 milliseconds. In an embodiment, the first parameter and the second parameter may be the same or different. The first parameter may be at least one environmental condition within a building or structure. For example, the at least one environment condition may be at least one of water presence, temperature, freezing condition, presence of light, and/or presence of motion. The first sensor and the second sensor are battery powered.

In an embodiment, a method includes the steps of, with a first sensor, detecting a parameter, and transmitting data indicative of the parameter from the first sensor to a second sensor, the second sensor being connected to an internet-enabled network, wherein the first sensor is not in direct communication with the internet-enabled network. In an embodiment, the second sensor is in direct communication with a gateway device of the internet-enabled network. In an embodiment, the method may further include transmitting the data from the second sensor to the internet-enabled network via the gateway device. In an embodiment, the parameter is at least one environmental condition within a building or structure such as water presence, temperature, freezing condition, presence of light, and/or motion. The method may also include the step f transmitting the data from the second sensor to at least one additional sensor prior to transmission of the data to the internet-enabled network.

In another embodiment, a system includes a first sensor device configured to gather data relating to a first parameter and a second sensor device configured to gather data relating to a second parameter. Each of the sensor devices are configured to operate in a first state where the sensor is in range of a gateway device, and a second state where the sensor is out of range of the gateway device. When in the second state, the first sensor is configured to transmit a beacon encoded with the data relating to the first parameter, and when in the first state, the second sensor is configured to listen for a beacon for a duration of time and to receive the beacon and data from the first sensor. In an embodiment, the system also includes a gateway device configured for connection to a public network, wherein the second sensor device is in direct communication with the gateway device. The system may also include a plurality of additional sensor devices intermediate the first sensor device and the second sensor device, each of said additional sensors being configured to operate in the first state and the second state. In an embodiment, the duration of time that the second sensor listens for the beacon defines a receive window, and the first sensor transmits the beacon for a duration of time defining a transmit window, wherein the transmit window is a multiple of the receive window. In one embodiment, the transmit window is at least one minute and the receive window is between about 20 milliseconds and about 60 milliseconds. In an embodiment, the first parameter and the second parameter are the same. The first parameter may be at least one environmental condition within a building or structure such as water presence, temperature, freezing condition, presence of light, and/or presence of motion. The first sensor and the second sensor may be battery powered.

In yet another embodiment, a method of relaying sensor data includes the steps of, with a first sensor, detecting an environmental condition, and with one or more intermediary sensors, relaying the sensor data from the first sensor to a gateway device of an internet-enabled network using a point-to-point relay protocol, where the first sensor is not in direct communication with the gateway device. The gateway device may be a second sensor configured to detect an environmental condition. The environmental condition may be at least one of water presence and a freezing condition. The first sensor and the one or more intermediary sensors may be battery powered.

In yet another embodiment, a method for relaying sensor data includes the steps of, detecting data indicative of an environmental condition using a battery-powered sensor deployed in an internet of things (IoT) network including a plurality of battery-powered sensors, initiating communication with an adjacent battery-powered sensor in the IoT network via a point to point relay protocol, transmitting the detected environmental condition data from the battery-powered sensor that initially detected the data to the adjacent battery-powered sensor, determining whether the adjacent battery-powered sensor that receives the detected environmental condition data is connected to an internet-enabled network, in response to determining that the adjacent battery-powered sensor has a connection to an internet-enabled network, communicating the detected environmental condition data to the internet via the internet-enabled network connection, and in response to determining that the adjacent battery-powered sensor does not have a connection to an internet-enabled network, transmitting the detected environmental condition data to one or more intermediary battery-powered sensors in the IoT network.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize. For example, parts, components, steps and aspects from different embodiments may be combined or suitable for use in other embodiments even though not described in the disclosure or depicted in the figures. Therefore, since certain changes may be made in the above-described invention, without departing from the spirit and scope of the invention herein involved, it is intended that all of the subject matter of the above description shown in the accompanying drawings shall be interpreted merely as examples illustrating the inventive concept herein and shall not be construed as limiting the invention.

In this regard, while the disclosed subject matter has been described in connection with various embodiments and corresponding figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below. For example, references to "one embodiment" of the present invention are not intended to be interpreted as excluding the existence of additional embodiments that also incorporate the recited features.

In the appended claims, the terms "including" and "in which" are used as the plain-English equivalents of the respective terms "comprising" and "wherein." Moreover, in the following claims, terms such as "first," "second," "third," "upper," "lower," "bottom," "top," etc. are used merely as labels, and are not intended to impose numerical or positional requirements on their objects. The terms "substantially," "generally," and "about" indicate conditions within reasonably achievable manufacturing and assembly tolerances, relative to ideal desired conditions suitable for achieving the functional purpose of a component or assembly. Further, the limitations of the following claims are not written in means-plus-function format and are not intended to be interpreted as such, unless and until such claim limitations expressly use the phrase "means for" followed by a statement of function void of further structure.

What has been described above includes examples of systems and methods illustrative of the disclosed subject matter. It is, of course, not possible to describe every combination of components or methodologies here. One of ordinary skill in the art may recognize that many further combinations and permutations of the claimed subject matter are possible. Furthermore, to the extent that the terms "includes," "has,""possesses," and the like are used in the detailed description, claims, appendices and drawings, such terms are intended to be inclusive in a manner similar to the term "comprising" as "comprising" is interpreted when employed as a transitional word in a claim. That is, unless explicitly stated to the contrary, embodiments "comprising," "including," or "having" an element or a plurality of elements having a particular property may include additional such elements not having that property. Further, an element or step recited in the singular and proceeded with the word "a" or "an" should be understood as not excluding plural of the elements or steps, unless such exclusion is explicitly stated. In addition, the phrase "one or more of" used before a listing of a number of possible options or recitations is intended to mean any of the natural inclusive permutations. For example, "one or more of A and B" is satisfied by only A, only B, or both A and B.

This written description uses examples to disclose several embodiments of the invention, including the best mode, and also to enable one of ordinary skill in the art to practice the embodiments of invention, including making and using any devices or systems and performing any incorporated methods. The patentable scope of the invention is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A system, comprising:
a first sensor device configured to gather data relating to a first parameter; and
a second sensor device configured to gather data relating to a second parameter;
wherein each of the sensor devices are configured to operate in a first state where the sensor device is in range of a gateway device, and a second state where the sensor device is out of range of the gateway device;
wherein when in the second state, the first sensor device is configured to transmit a beacon encoded with the data relating to the first parameter; and
wherein when in the first state, the second sensor device is configured to listen for a beacon for a duration of time and to receive the beacon and data from the first sensor device.

2. The system of claim 1, further comprising:
a gateway device configured for connection to a public network;
wherein the second sensor device is in direct communication with the gateway device, in particular wherein
the second sensor device is configured to transmit the data relating to the first parameter to a public IoT network via the gateway device.

3. The system of claim 2, further comprising:
a plurality of additional sensor devices intermediate the first sensor device and the second sensor device, each of said additional sensor devices being configured to operate in the first state and the second state.

4. The system of claim 1, wherein:
the duration of time that the second sensor device listens for the beacon defines a receive window; and
wherein the first sensor device transmits the beacon for a duration of time defining a transmit window;
wherein the transmit window is a multiple of the receive window, in particular wherein:
the transmit window is at least one minute; and
the receive window is between about 20 milliseconds and about 60 milliseconds.

5. The system of claim 1, wherein:
the first parameter and the second parameter are the same and/or
the first parameter is at least one environmental condition within a building or structure, in particular wherein:
the at least one environment condition is at least one of water presence, temperature, freezing condition, presence of light, and/or presence of motion.

6. The system of claim 1, wherein:
the first sensor device and the second sensor device are battery powered.

7. A method, comprising the steps of:
with a first sensor, detecting a parameter; and
transmitting data indicative of the parameter from the first sensor to a second sensor, the second sensor being connected to an internet-enabled network;
wherein the first sensor is not in direct communication with the internet-enabled network,in particular wherein:
the second sensor is in direct communication with a gateway device of the internet-enabled network, in particular the method further comprising the step of:
transmitting the data from the second sensor to the internet-enabled network via the gateway device.

8. The method according to claim 7, wherein:
the parameter is at least one environmental condition within a building or structure, in particular wherein:
the at least one environment condition is at least one of water presence, temperature, freezing condition, presence of light, and/or motion.

9. The method according to claim 7, further comprising the step of:
transmitting the data from the second sensor to at least one additional sensor prior to transmission of the data to the internet-enabled network.

10. A system, comprising:
a first sensor device configured to gather data relating to a first parameter; and
a second sensor device configured to gather data relating to a second parameter;
wherein each of the sensor devices are configured to operate in a first state where the sensor is in range of a gateway device, and a second state where the sensor device is out of range of the gateway device;
wherein when in the second state, the first sensor device is configured to transmit a beacon encoded with the data relating to the first parameter; and
wherein when in the first state, the second sensor device is configured to listen for a beacon for a duration of time and to receive the beacon and data from the first sensor device.

11. The system of claim 10, further comprising:
a gateway device configured for connection to a public network;
wherein the second sensor device is in direct communication with the gateway device, in particular the system further comprising:
a plurality of additional sensor devices intermediate the first sensor device and the second sensor device, each of said additional sensor devices being configured to operate in the first state and the second state.

12. The system of claim 10, wherein:
the duration of time that the second sensor device listens for the beacon defines a receive window; and
wherein the first sensor device transmits the beacon for a duration of time defining a transmit window;
wherein the transmit window is a multiple of the receive window, in particular wherein:
the transmit window is at least one minute; and
the receive window is between about 20 milliseconds and about 60 milliseconds.

13. The system of claim 10, wherein:
the first parameter and the second parameter are the same and/or
the first parameter is at least one environmental condition within a building or structure, in particular wherein:
the at least one environment condition is at least one of water presence, temperature, freezing condition, presence of light, and/or presence of motion.

14. The system of claim 10, wherein:
the first sensor device and the second sensor device are battery powered.

15. A method of relaying sensor data, comprising the steps of:
with a first sensor, detecting an environmental condition; and
with one or more intermediary sensors, relaying the sensor data from the first sensor to a gateway device of an internet-enabled network using a point-to-point relay protocol;
wherein the first sensor is not in direct communication with the gateway device.

16. The method according to claim 15, wherein:
the gateway device is a second sensor configured to detect an environmental condition, in particular wherein:
the environmental condition is at least one of water presence and a freezing condition, in particular wherein:
the first sensor and the one or more intermediary sensors are battery powered.
